# EUROPEAN PATENT SPECIFICATION

(11) **EP 3 563 110 B1**
(45) Date of publication and mention of the grant of the patent: **29.06.2022**
(21) Application number: 17887419.4
(22) Date of filing: 27.12.2017
(51) Int. Cl.: F41H 5/007, C04B 14/32

(54) **REACTIVE ARMOUR**
REAKTIVE PANZERUNG
BLINDAGE RÉACTIF

(30) Priority: 29.12.2016 IL 24985916
(43) Date of publication of application: 06.11.2019
(73) Proprietor: Rafael Advanced Defense Systems Ltd., 3102102 Haifa (IL)
(72) Inventor: GLIKIN, Leonid, 2018300 Shechania (IL); SILBERMAN, Iris, 1790600 Shimshit (IL); FRILING, Samuel, 2514700 Kfar Vardim (IL); BENYAMI, Moshe, 3452719 Haifa (IL)
(74) Representative: Studio Torta S.p.A.
(86) International application number: PCT/IL2017/051390
(87) International publication number: WO 2018/122844

(56) References cited:
- EP-A1- 0 299 253
- EP-A1- 0 860 678
- WO-A2-2006/109304
- EA-A1- 200 301 266
- US-A- 4 869 152
- US-A- 5 910 638
- US-A- 5 922 986
- US-A1- 2011 083 776
- US-A1- 2012 266 745

## Description

### Field of the Invention

The present invention relates to the field of reactive armour. More particularly, the invention relates to a shapeable material for reactive surfaces and to a process for its preparation.

### Background of the Invention

Reactive armour has been employed in the art for quite some time to defend against attacks by a variety of anti-tank charges (which are used against all kinds of armoured vehicles) and to reduce the damage done to the vehicle being protected. It is most effective in protecting against shaped charge warheads and kinetic energy penetrators.

An element of explosive reactive armour consists of an explosive layer sheet or slab of high explosive sandwiched between two plates, typically metal ones. When hit by anti-armour threat, either Shaped Charge warheads or Long Rod penetrators, the explosive detonates, forcibly driving the metal plates apart to damage the penetrator. Against a shaped charge, the projected plates disrupt the metallic jet penetrator, effectively providing a greater path-length of material to be penetrated. Against a kinetic energy penetrator, the projected plates serve to deflect and break up the rod.

The disruption is attributed mainly to the following mechanism. Since the plates are angled with respect to the impact direction of shaped charge warheads, as the plates move outwards the impact point, the plates move continuously over time, requiring the jet to cut through additional fresh plate material. This effect actually increases the effective plate thickness during the impact.

EA 2003 01266 discloses a reactive explosive protection device that comprises a body cavity filled with a charge of explosive agent, two opposite walls of the cavity being metallic protective plates capable of moving relative each other at the moment of explosion, and each other wall that is a multilayer structure. The charge of the explosive agent comprises a crystalline high explosive material, an inert binder, and hollow and inert microspheres that are distributed evenly in the charge.

WO 2006/109304 discloses an explosive composition comprising one or more explosive material in an amount between 42 and 58%vol, one or more fire retardant material in an amount between 15 and 26%vol and a polydimethylsiloxane (PDMS) binder in an amount between 20 and 36%vol which in one embodiment can be manufactured as a dough.

A complication to the use of reactive armour is the hazardous risks to the surroundings - dismounted troops or vehicles, due to fragments or moving plates emanating from the explosive detonation. Another complication is that conventional reactive armour is made of flat plates and is not suited to protect non-planar surfaces. It would therefore be highly desirable to provide new reactive armour that reduces the collateral damage effects to the surroundings and which can also be easily applied to non-planar surfaces.

It is an object of the present invention to provide a novel reactive component of reactive armour, which maintains its efficacy against threats while reducing the damage to the surroundings, as compared to prior art reactive armours.

It is another object of the invention to provide such an energetic component of reactive armour, which can be applied to non-planar surfaces.

It is yet another object of the invention to provide reactive armour employing the novel energetic component.

Other objects and advantages of the invention will become apparent as the description proceeds.

### Summary of the Invention

The invention relates to a rigid or flexible protection element for reactive protection against shaped charge warheads and kinetic energy projectiles, comprising a metallic or ceramic powder dispersed within a matrix of plastic explosive and a binder, which can be utilized as a stand-alone protection element or as a part of protection system such as reactive cassette.

The present invention is defined by a flexible protection element for reactive protection against shaped charge warheads and kinetic energy projectiles , according to the appended claim 1

In one embodiment, the protection element of the invention is configured to be fully detonated upon impact by a shaped charge warhead or a kinetic energy projectile.

In another embodiment of the invention the protection element is configured to be only locally detonated upon impact by a shaped charge warhead or kinetic energy projectile.

The reactive element of the invention can have a distribution of the metallic powder or ceramic powder within the matrix, which is homogeneous, or one which is non-homogeneous.

The invention also encompasses a combination of several reactive elements as described above, which differ in the amount of the metallic or ceramic powder dispersed within the matrix of plastic explosive and binder.

In another aspect the invention is directed to a protection element in which the explosive is homogeneously dispersed throughout the entire area of the cross section and in a further embodiment of the invention there is provided a protection element in which the explosive is dispersed in different concentrations throughout the entire area of the cross section. Moreover, if another embodiment of the invention the protection element is designed such that the explosive is dispersed only in partial area of the cross section.

The invention further provides a reactive element, which is not planar in shape.

In one embodiment of the invention the metal powder provided in the reactive element is a tungsten powder. According to one embodiment the median diameter of the tungsten particles is approximately 120 µ. In another embodiment of the invention the metal powder is a tungsten carbide powder, and in yet another embodiment of the invention the mean diameter of the tungsten carbide particles is approximately 80 mµ.

While the invention is not limited to any specific explosive, according to one embodiment of the invention the plastic explosive material is selected from Octahydro-1,3,5,7-tetranitro-1,3,5,7-tetrazocine (HMX) and 1,3,5-Trinitroperhydro-1,3,5-triazine (RDX).

Similarly, the solid particles can have a variety of shapes, and according to one embodiment of the invention the particles have an essentially round shape.

Binders suitable for use with the invention will be recognized by the skilled person. According to one embodiment of the invention the binder is selected from among Hydroxyl-terminated polybutadiene (HTPB) and Polydimethylsiloxane (PDMS).

The invention further encompasses structure comprising a reactive layer according to the invention, including but not limited to vehicles and buildings. According to one embodiment of the invention at least part of the protected surface is rounded or wavy.

### Brief Description of the Drawings

In the drawings:

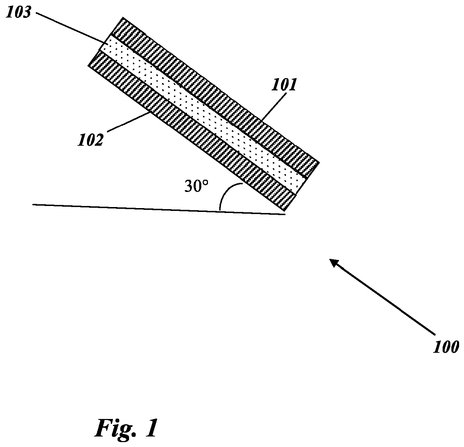

Fig. 1 schematically illustrates typical reactive armour.

### Detailed Description of the Invention

Fig. 1 schematically illustrates a typical reactive armour 100, which consists of upper metal plate 101, bottom metal plate 102, and explosive layer 103, sandwiched between them. A typical angle at which the reactive armour is positioned is 30° relative to the ground. According to the invention this set-up can be maintained, if desired, but the intermediate layer of explosive material can also be used as a stand-alone element without adding the metal plates, while maintaining the efficiency of protection. This is particularly important when it is desired to protect a non-planar (e.g. curved) surface such as a tank turret.

A typical reactive component according to the invention contains (23-33% on a weight basis) of an explosive material, (64-74%wt) of a particulate solid and (2-4%wt) of a binder, which may be, for instance, HTPB, or a silicon-based or other binder. Binders are well known in the art and, therefore, are not discussed herein in detail, for the sake of brevity. An illustrative example is a reactive material made of 28%wt HMX explosive, 69%wt of tungsten carbide powder with a median diameter of 80µm and 3% of HTPB. A typical thickness of the resulting reactive layer is in the range of 9-30 mm.

It should be noted that the amount of particulate material to be used according to the invention, as well as the size of the particles, are important. It has been found that a diameter of between 45-180µm provides a suitable result, although the invention is not limited to such sizes, which are provided for the purpose of illustration. The particles can be rounded in shape or can be irregular, in which case the effective diameter is referred to.

The reactive layer can be prepared by a simple process, which involves mixing performed in a Planetary-type mixers at 60 rpm and temperature of 50-60°c. The explosive dough produced by mixing is injected in vacuum conditions followed by pressing to explosive sheets in the required thickness. After pressing, the material is cured in an oven at 55°C ±5°C. For safety considerations, all the procedures are preferably performed from a remote control room.

### Examples

All the reactive layers prepared according to the following examples were tested in a standard test using a 30° support and an RPG-7 as the charge. All reactive layers gave results comparable to those of the prior art.

### Example 1

HMX Class 3 (19%wt), HMX Class 5 (9%wt) was employed, together with particles of tungsten carbide (69%wt) and HTPB up to 100%wt, to prepare a reactive layer. The particle size distribution of the tungsten carbide was d10=50 µm; d50=80 µm; d90=130 µm and the particles were rounded in shape. Care was taken to obtain a substantially homogeneous distribution of the particles in the mixture. The equipment used was a high shear mixer and an injector and hydraulic press. The process involved the following steps: Raw materials mixing followed by injection and dough pressing to get sheet with appropriate thickness. Final steps are curing and sheet cutting.

### Example 2

Example 1 was repeated, with different particles. HMX Class 3 (16%wt), HMX Class 5 (7%wt) were employed, together with tungsten particles (73%wt) and HTPB up to 100%wt, to prepare a reactive layer. The particle size distribution of the tungsten was d10=90 µm; d50=120 µm; d90=170 µm and the particles were rounded in shape. Care was taken to obtain a substantially homogeneous distribution of the particles in the mixture. The equipment used was a high shear mixer and an injector and hydraulic press. The process involved the following steps: Raw materials mixing followed by injection and dough pressing to get sheet with appropriate thickness. Final steps are curing and sheet cutting.

### Example 3

Example 2 was repeated with the following parameters: RDX Class 1 (23%wt), RDX Class 5 (10%wt) were employed, together with particles of tungsten (64%wt) and HTPB (3%wt), to prepare a reactive layer. The median particle size of the tungsten was d50=80 µm.

All the above descriptions and examples have been provided for the purpose of illustration and are not intended to limit the invention in any way, except as provided for by the appended claims. Many different metal and ceramic materials can be employed, a large range of diameters can be used, and many suitable binders can be utilized, which are known to the skilled person, without exceeding the scope of the invention.

Additionally, the explosive of the type described herein may be beneficially used in other applications, where formability into curved structures and minimum collateral damage are important. One such application is the countermeasure of active protection system against shaped-charge missiles warhead or rockets and kinetic penetrators. In the prior art, these countermeasures have employed barrel-launched projectiles, spherical or linear explosively-formed projectiles, fragmentation explosive charge, or blast charge, all of which require very precise aiming and timing, and/or exhibit highly intolerable collateral damage. Use of the explosive according to the invention in such countermeasure will assure neutralization of the threat under easier precision constraints of aiming and timing, with minimal collateral damage. Another application of the invention is in warheads of precision-guided munitions, which are meant to assure minimal collateral damage.

## Claims

1. A flexible protection element (103) for reactive protection against shaped charge warheads and kinetic energy projectiles, comprising a formable doughy mixture having a matrix of plastic explosive and a binder, **characterized in that** said protection element (103) comprises a metallic or ceramic powder which is dispersed within said matrix, said doughy mixture consisting of 23 to 33 wt% of said plastic explosive, 64 to 74 wt% of said metallic or ceramic powder, and 2 to 4 wt% of said binder.

2. The element as claimed in claim 1, which is of a single layer when utilized as a stand-alone protection element or is a reactive layer.

3. The element as claimed in claim 1, when utilized as a part of a protection system such as a reactive cassette (100).

4. The element as claimed in claim 1, which is fully detonated or only locally detonated upon impact by a shaped charge warhead or kinetic energy projectile.

5. The element as claimed in claim 1, in which distribution of the metallic powder or ceramic powder within the matrix is homogeneous or non-homogeneous.

6. A combination of several elements, each one as claimed in claim 1, which differ in an amount of the metallic or ceramic powder dispersed within the matrix of plastic explosive and binder.

7. The element as claimed in claim 1, in which the explosive is-
a) homogeneously dispersed throughout an entire cross section of the element; or
b) dispersed in different concentrations throughout an entire cross section of the element; or
c) dispersed only in a partial region of a cross section of the element.

8. The element as claimed in claim 1, which is non-planar in shape or is formed into a flexible sheet.

9. The element as claimed in claim 1, wherein the metal powder is a tungsten powder or a tungsten carbide powder.

10. The element as claimed in claim 9, wherein-
a) a median diameter of tungsten particles is approximately 120 µ; or
b) a mean diameter of tungsten carbide particles is approximately 80 mµ.

11. The element as claimed in claim 1, wherein the plastic explosive is selected from HMX and RDX.

12. The element as claimed in claim 1, wherein particles of the powder have an essentially round shape.

13. The element as claimed in claim 1, wherein the binder is selected from among HTPB and PDMS.

14. A structure comprising the reactive layer according to claim 2.

15. The structure according to claim 14-
a) which is a vehicle; or
b) which is a building; or
c) wherein at least part of its surface is rounded or wavy.

## Patentansprüche

1. Flexibles Schutzelement (103) für reaktiven Schutz gegen Hohlladungsgefechtsköpfe und Wuchtgeschosse, das eine formbare teigartige Mischung umfasst, die eine Matrix aus plastischem Sprengstoff und einem Bindemittel aufweist, **dadurch gekennzeichnet, dass** das Schutzelement (103) ein metallisches oder keramisches Pulver umfasst, das in der Matrix verteilt ist, wobei die teigartige Mischung aus 23 bis 33 Gew.-% des plastischen Sprengstoffs, 64 bis 74 Gew.-% des metallischen oder keramischen Pulvers und 2 bis 4 Gew.-% des Bindemittels besteht.

2. Element nach Anspruch 1, das aus einer einzelnen Schicht besteht, wenn es als ein alleinstehendes Schutzelement verwendet wird, oder eine reaktive Schicht ist.

3. Element nach Anspruch 1, wenn es als ein Teil eines Schutzsystems wie etwa einer reaktiven Kassette (100) verwendet wird.

4. Element nach Anspruch 1, das beim Einschlag eines Hohlladunggefechtskopfs oder eines Wuchtgeschosses vollständig zur Detonation gebracht wird oder nur lokal zur Detonation gebracht wird.

5. Element nach Anspruch 1, bei dem die Verteilung des metallischen Pulvers oder des keramischen Pulvers innerhalb der Matrix homogen oder nicht homogen ist.

6. Kombination mehrerer Elemente, jedes nach Anspruch 1, die sich durch die Menge des metallischen oder keramischen Pulvers, das in der Matrix aus plastischem Sprengstoff und dem Bindemittel verteilt ist, unterscheiden.

7. Element nach Anspruch 1, bei dem der Sprengstoff
a) über einen gesamten Querschnitt des Elements homogen verteilt ist; oder
b) über einen gesamten Querschnitt des Elements in unterschiedlichen Konzentrationen verteilt ist; oder
c) nur in einem Teilbereich eines Querschnitts des Elements verteilt ist.

8. Element nach Anspruch 1, das nicht-planar geformt ist oder zu einer flexiblen Folie geformt ist.

9. Element nach Anspruch 1, wobei das metallische Pulver ein Wolframpulver oder ein Wolframkarbidpulver ist.

10. Element nach Anspruch 9, wobei
a) ein Median-Durchmesser von Wolframpartikeln ungefähr 120 µm beträgt; oder
b) ein mittlerer Durchmesser von Wolframkarbidpartikeln ungefähr 80 µm beträgt.

11. Element nach Anspruch 1, wobei der plastische Sprengstoff aus HMX oder RDX ausgewählt wird.

12. Element nach Anspruch 1, wobei Partikel des Pulvers eine im Wesentlichen runde Form aufweisen.

13. Element nach Anspruch 1, wobei das Bindemittel aus HTPB oder PDMS gewählt ist.

14. Struktur, die die reaktive Schicht nach Anspruch 2 umfasst.

15. Struktur nach Anspruch 14,
a) die ein Fahrzeug ist; oder
b) die ein Gebäude ist; oder
c) wobei mindestens ein Teil ihrer Oberfläche abgerundet oder gewellt ist.

## Revendications

1. Elément de protection souple (103) pour la protection réactive contre des ogives à charge creuse et des projectiles à énergie cinétique comprenant :
- un mélange pâteux déformable ayant une matrice de plastique explosif et un liant,
**caractérisé en ce que**
l'élément de protection (103) comprend une poudre métallique ou céramique dispersée dans la matrice,
le mélange pâteux comprend 23-33 % pondéraux de plastique explosif, 64-74% pondéraux de poudre métallique ou céramique et 2-4% pondéraux de liant.

2. Elément selon la revendication 1,
qui est en une seule couche lorsqu'il est utilisé comme élément de protection séparé ou une couche réactive.

3. Elément selon la revendication 1,
utilisé comme partie d'un système de protection tel qu'un caisson réactif (100).

4. Elément selon la revendication 1,
qui détonne complètement ou localement lors d'un impact par une ogive à charge creuse ou un projectile à énergie cinétique.

5. Elément selon la revendication 1,
dans lequel
la distribution de la poudre métallique ou de la poudre céramique dans la matrice est homogène ou non homogène.

6. Combinaison de plusieurs éléments tels que ceux de la revendication 1 et qui diffèrent en quantité par la poudre métallique ou céramique dispersée dans la matrice d'explosif plastique et de liant.

7. Elément selon la revendication 1,
dans lequel
l'explosif est
a) dispersé de manière homogène dans toute la section de l'élément ou,
b) dispersé à différentes concentrations dans toute la section de l'élément ; ou
c) dispersé seulement dans une partie de la section de l'élément.

8. Elément selon la revendication 1,
ayant une forme non plane ou une forme de feuille souple.

9. Elément selon la revendication 1,
dans lequel
la poudre métallique est de la poudre de tungstène ou de la poudre de carbure de tungstène.

10. Elément selon la revendication 9,
dans lequel
a) le diamètre médian des particules de tungstène est approximativement égal à 120 µ, ou
b) le diamètre moyen des particules de carbure de tungstène est approximativement égal à 80 µ.

11. Elément selon la revendication 1,
dans lequel
le plastic explosif est choisi HMX, ou RDX.

12. Elément selon la revendication 1,
dans lequel
les particules de poudre ont pratiquement une forme ronde.

13. Elément selon la revendication 1,
dans lequel
le liant est choisi parmi le polybutadiène à terminaison hydroxyde HTPB et polydiméthylsiloxane PDMS.

14. Structure comprenant la couche réactive selon la revendication 2.

15. Structure selon la revendication 14, qui est
a) un véhicule ou
b) une construction ou
c) au moins une partie de sa surface est ronde ou ondulée.
